# EUROPÄISCHE PATENTSCHRIFT

(11) **EP 0 474 156 B1**
(45) Veröffentlichungstag und Bekanntmachung des Hinweises auf die Patenterteilung: **03.01.1996**
(21) Anmeldenummer: 91114733.8
(22) Anmeldetag: 02.09.1991
(51) Int. Cl.: G06F 11/00, G05B 19/042, F23N 5/20

(54) **Verfahren zum überprüfen der Eingänge eines Mikroprozessors**
Method for testing the input of a microprocessor
Procédé pour vérifier les signaux d'entrée d'un microprocesseur

(30) Priorität: 04.09.1990 DE 4027950
(43) Veröffentlichungstag der Anmeldung: 11.03.1992
(73) Patentinhaber: HONEYWELL B.V., NL-1101 EA Amsterdam Z.O. (NL)
(72) Erfinder: Oost, Albert, NL-7887 TG Erica (NL)
(74) Vertreter: Rentzsch, Heinz, Dipl.-Ing.

(56) Entgegenhaltungen:
- DE-A- 3 900 642
- GB-A- 2 159 982

## Beschreibung

Die Erfindung betrifft ein Verfahren zum überprüfen der ordnungsgemäßen Beschaltung und Programmierung der Eingänge eines Mikroprozessors in einem Steuergerät, insbesondere einem Brenner-Steuergeräte Steuergeräte dieser Art unterliegen verschiedenen Sicherheitsbedingungen. Beispielsweise darf die Zündung der Flamme nur eingeleitet werden, wenn etwaige Restgase zuvor aus der Brennkammer herausgespült sind. Das Hauptgasventil darf nur öffnen, wenn sichergestellt ist, daß die Zündflamme brennt. Diese Bedingungen setzen voraus, daß einerseits die entsprechenden Sensoren zuverlässig und eigensicher arbeiten und andererseits der Mikroprozessor richtig beschaltet und programmiert ist. Keinesfalls darf das ordnungsgemäße Arbeiten irgendeiner Baugruppe, beispielsweise des Gebläses oder der Zündeinrichtung vorgetäuscht werden, wenn in Wirklichkeit ein Fehler vorliegt. Eigensichere Fühler und überwachungsschaltkreise sind in vielfacher Form bekannt. Ebenso kennt man Geräte zum überwachen der richtigen Funktionsweise von elektronischen Steuerungen, mit denen auch die Beschaltung von deren Ausgängen prüfbar ist (vgl. eee-Nachrichten vom 17. September l985, S. 8, rechte Spalte).

GB-A 2 159 982 beschreibt eine speicherprogrammierbare Steuerung mit einem Schaltkreis, der wahlweise als Eingangsschaltkreis für den Empfang der Signale einer Eingabevorrichtung oder als Ausgangsschaltkreis zur Abgabe von Steuersignalen an eine Last dient.

Aufgabe der Erfindung ist es, auch den den Programmablauf steuernden Mikroprozessor in die Eigenüberwachung einzubeziehen.

Diese Aufgabe wird gelöst durch das im Anspruch 1 gekennzeichnete Verfahren. Ist die im Merkmal (f) des Anspruchs 1 angegebene Bedingung nicht erfüllt, sei es, daß die geforderten Signale nicht auftreten oder in falscher Reihenfolge auftreten, so meldet das Steuergerät einen Fehler und bewirkt eine Sicherheitsabschaltung des Brenners, wie dies auch bei herkömmlichen, d. h. ohne Mikroprozessor arbeitenden Steuergeräten üblich ist. Der zur Durchführung des Verfahrens erförderliche Schaltungsaufwand läßt sich verringern, wenn als Blindwiderstand in dem der überprüfung dienenden Zeitglied ein im Steuergerät ohnehin vorhandener Blindwiderstand, beispielsweise eine Relaisspule, die Erregerspule eines Magnetventils, der Zeitgeber-Kondensator in einem RC-Glied oder dergl. benutzt und zumindest für die Dauer der überprüfung an den gerade überprüften Eingang des Mikroprozessors angeschaltet wird.

Die Erfindung wird nachfolgend anhand zweier in der Zeichnung wiedergegebener Ausführungsbeispiele erläutert, wobei die Programmierung des Mikroprozessors in der Ausführungsform gemäß
- Fig. 1: durch Anschließen eines Kondensators C an den zu überprüfenden Eingang E; und in
- Fig. 2: durch Anschließen einer Spule L an den Eingang E erfolgt.

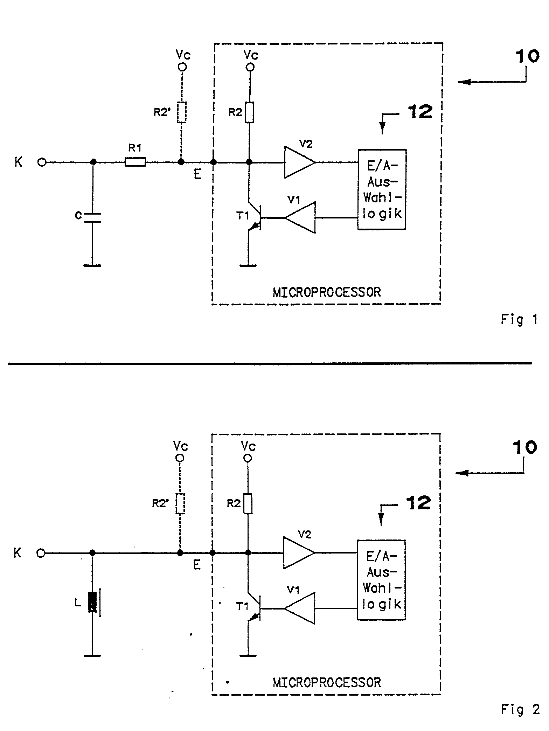

Der Mikroprozessor 10 weist eine Anzahl von Eingängen E auf, von denen nur einer dargestellt ist. Dieser Anschluß ist über ein Zeitglied an Masse gelegt. In Fig. 1 besteht dieses Zeitglied aus einem Widerstand Rl und einem Kondensator C. Ein Widerstand R2 verbindet den Eingang mit einer Betriebsspannungsklemme V_{c}. Falls kein solcher interner Widerstand R2 vorhanden ist, kann statt dessen ein externer Widerstand R2' der Zufuhr der Betriebsspannung V_{c} an den Eingang E dienen. Der Mikroprozessor 10 enthält ferner eine E/A-Auswahllogik, über die durch das Programm der Eingang E wahlweise als Ausgang konfiguriert werden kann. In diesem Falle schaltet der Verstärker V1 den Transistor T1 durch und legt damit den Eingang E an Masse. Am Eingang steht somit ein Signal (O). Ist der Eingang E hingegen als Eingang wirksam, so gelangt das ihm zugeführte Eingangssignal über den Verstärker V2 an die betreffenden Schaltkreise des Mikroprozessors.Die überprüfung des Eingangs läuft wie folgt ab:

Zunächst wird der Eingang E durch die Auswahllogik 12 als Ausgang konfiguriert. Der Transistor T1 legt hierbei den Eingang E an Masse. Sofern der Kondensator C zuvor aufgeladen war, entlädt er sich über den Widerstand R1 und den Transistor T1. Am Eingang E steht somit ein Logikpegel O. Nach einer vorgegebenen Zeitspanne, die beispielsweise der zehnfachen Zeitkonstante C x R1 entspricht, kann man davon ausgehen, daß der Kondensator vollständig entladen ist. Hiernach wird der Anschluß E über die Auswahllogik 12 wieder als Eingang konfiguriert.

Unmittelbar nach dieser Neukonfiguration wird die Spannung am Eingang E gemessen. Sie muß, da der Kondensator C entladen ist, den Wert O haben. Die Messung sollte innerhalb einer Zeitspanne t ≤ 0,1 RC vorgenommen werden. Der Meßwert wird gespeichert. Da der Eingang E durch den nunmehr gesperrten Transistor T1 vom Massepotential getrennt ist, lädt sich der Kondensator C über die Widerstände R2 und R1 aus der Betriebsspannung V_{c} auf. Nach einer Zeitspanne, die etwa dem zehnfachen Wert der Zeitkonstante dieses Ladestromkreises ist, d. h. t ≥ C x (R1+R2) wird die Spannung am Eingang E erneut gemessen. Jetzt muß sie bei ordnungsgemäßem Betrieb einen von O verschiedenen Wert, also den Wert 1 haben. Treten die beiden genannten Spannungswerte auf und zwar nur in der genannten Reihenfolge, so ist der Eingang ordnungsgemäß programmiert und beschaltet. In allen anderen Fällen ergeben sich unterschiedliche Spannungskombinationen, wie dies aus der nachfolgenden Tabelle 1 ersichtlich ist. Darin bedeutet (+), daß das betreffende Bauteil in Ordnung ist. Die zweite Spalte beschreibt den soeben geschilderten Prüfvorgang. In den Spalten 3 bis 6 sind verschiedene Fehlermöglichkeiten dargestellt. Ist der Eingang E insofern falsch programmiert, als er sich nicht wieder als Eingang neu konfigurieren läßt, sondern als Ausgang konfiguriert, d. h. der Transistor T1 leitend bleibt, so ergeben sich die gleichen Meßsignale wie im Falle eines unterbrochenen Widerstands R2, d. h. die Spannung am Eingang E bleibt auf dem Wert O.

**Tabelle 1**

| | | | | | |
|---|---|---|---|---|---|
| C | (+) | Unterbrochen | Kurzgeschlossen | (+) | (+) |
| R1 | (+) | (+) | (+) | Unterbrochen | (+) |
| R2 | (+) | (+) | (+) | (+) | Unterbrochen |
| Warten für t> 10RC | X | X | X | X | X |
| Prüfen nach t≤ 0,1RC | 0 | 1 | 0 | 1 | 0 |
| Prüfen nach t≥ 10RC | 1 | 1 | 0 | 1 | 0 |
| Ergebnis | (+) | Fehler | Fehler | Fehler | Fehler |

Bei der Schaltungsanordnung nach Fig. 2 dient anstelle eines Kondensators eine Spule L als Blindwiderstand. Diese hat einen ohm'schen Eigenwiderstand, so daß der Widerstand R1 entfallen kann. Der Widerstand R1 dient bei der Schaltung nach Fig. 1 der Strombegrenzung am Eingang E. Ist der Mikroprozessor kurzschlußfest, so kann auch in Fig. 1 der Widerstand Rl entfallen. In Fig. 2 läuft der Prüfvorgang in der gleichen Weise ab, wie zuvor anhand von Fig. 1 geschildert. Zunächst wird die Spule L über den Transistor T1 kurzgeschlossen, wenn der Eingang E als Ausgang konfiguriert ist. Sobald die Neukonfiguration als Eingang erfolgt ist, wird die Spannung am Eingang E innerhalb einer Zeitspanne t ≤ 0,1L/R2 gemessen, so hat sie bei ordnungsgemäßer Programmierung und Beschaltung den Wert 1 und sinkt beim Fortschreiten der Zeit auf 0 ab. Nach einer Zeitspanne entsprechend etwa der zehnfachen Zeitkonstante L/R2 sollte sie den Wert Null erreicht haben. Dies ergibt sich aus der zweiten Spalte der Tabelle 2. Die verschiedenen Fehlermöglichkeiten sind in den Spalten 3, 4 und 5 wiedergegeben. Sollte der Transistor T1 nicht sperren, d. h. der Eingang E als Ausgang konfiguriert bleiben, so steht an ihm ständig die Spannung 0, wodurch ein Fehler angezeigt wird (vgl. Spalten 4 und 5).

**Tabelle 2**

| | | | | |
|---|---|---|---|---|
| L | (+) | Unterbrochen | Kurzgeschlossen | (+) |
| R2 | (+) | (+) | (+) | Unterbrochen |
| Warten für t> L/R2 | X | X | X | X |
| Prüfen nach t≤ 0,1L/R2 | 1 | 1 | 0 | 0 |
| Prüfen nach t≥ 10 L/R2 | 0 | 1 | 0 | 0 |
| Ergebnis | (+) | Fehler | Fehler | Fehler |

Der weiterhin vorstellbare Fehlerzustand eines kurzgeschlossenen Widerstandes R1 oder R2 ist in den Tabellen nicht berücksichtigt, weil bei der Verwendung von Kohleschicht- oder Metallschichtwiderständen die Gefahr eines Kurzschlusses dieser Bauelemente nicht gegeben ist.

## Patentansprüche

1. Verfahren zum Überprüfen der ordnungsgemäßen Beschaltung und Programmierung der Eingänge (E) eines Mikroprozessors (10) in einem Steuergerät, insbesondere einem Brennersteuergerät, wobei ein Mikroprozessor (10) verwendet wird, dessen Eingang wahlweise als Ausgang Kontigurierbar ist, **gekennzeichnet durch** folgende Schritte
a) an den Eingang (E) wird ein einen Blindwiderstand (Spule, Kondensator) enthaltendes Zeitglied (C,R1,R2;L,R2) angeschlossen;
b) der Eingang wird durch ein Steuerprogramm als Ausgang konfiguriert und auf niedriges Ausgangspotential (0) gesetzt;
c) nach einer Zeitspanne, welche dem mehrfachen, z. B. dem zehnfachen Wert der Zeitkonstante des Zeitgliedes entspricht, wird der Eingang durch das Steuerprogramm wieder auf seine Funktion als Eingang umgeschaltet;
d) unmittelbar danach, vorzugsweise innerhalb einer Zeitspanne, die kleiner ist als ein Zehntel der Zeitkonstanten des Zeitgliedes, wird die Spannung am Eingang gemessen und gespeichert;
e) nach einer Zeitspanne, welche dem Mehrfachen, z. B. dem zehnfachen Wert der Zeitkonstanten des Zeitgliedes entspricht, wird die Spannung am Eingang erneut gemessen und gespeichert;
f) der Eingang wird nur dann als ordnungsgemäß beschaltet und programmiert anerkannt, wenn
f1) im Falle eines kapazitiven Blindwiderstandes (C) bei der ersten Messung (d) die Spannung am Eingang niedrig (0) und bei der zweiten Messung (e) die Spannung am Eingang hoch (1) ist; bzw.
f2) im Falle eines induktiven Blindwiderstands (L) bei der ersten Messung (d) die Spannung am Eingang hoch (1) und bei der zweiten Messung (e) die Spannung am Eingang niedrig (0) ist.

2. Schaltungsanordnung zur Durchführung des Verfahrens nach Anspruch 1, **dadurch gekennzeichnet,** daß das Zeitglied als Blindwiderstand einen im Steuergerät ohnehin vorhandenen Blindwiderstand, z. B. eine Relaisspule oder einen Zeitgeberkondensator umfaßt.

3. Schaltungsanordnung nach Anspruch 2, **dadurch gekennzeichnet,** daß mit dem Blindwiderstand (C;L) ein ohm'scher Widerstand (R2) in Reihe zwischen eine Versorgungsspannungsklemme (V_{c}) und Masse eingeschaltet und der Verbindungspunkt der Reihenschaltung an den Eingang (E) des Mikroprozessors (10) angeschlossen ist.

## Claims

1. A method for testing the appropriate connection and programming of the inputs (E) of a microprocessor (10) in a control apparatus, in particular in a burner control apparatus, wherein a microprocessor (10) is used whose inputs selectively can be configurated as outputs, **characterized** b y the following steps:
a) a timing member (C, R1, R2; L, R2) containing a reactance (coil, capacitor) is connected to the input (E);
b) the input is configurated as an output by means of a control program and is set to a low output voltage (0);
c) after a period of time corresponding a multiple of, e.g. ten times, the value of the time constant of the timing member, the input is reset to its function as an input by means of the control program;
d) immediately thereafter, preferably within a period of time which is shorter than one-tenth of the time constant of the timing member, the voltage at the input is measured and stored;
e) after a period of time corresponding to a multiple of e.g. ten times, the time constant of the timing member, the voltage at the input is measured again and stored;
f) the input is acknowledged as properly connected and programmed if:
f1) in the case of a capacitive reactance (C) at the first measurement (d) the voltage at the input is low (0) and at the second measurement (e) the voltage at the input is high (1); or
f2) in the case of an inductive reactance (L) at the first measurement (d) the voltage at the input is high (1) and at the second measurement (e) the voltage at the input is low (0).

2. Circuit arrangement for performing the method of claim 1, **characterized** **in that** the timing member as its reactance comprises a reactance which is already present in the control apparatus, e.g. a relay coil or a timer capacitor.

3. Circuit arrangement according to claim 2, **characterized in that** an ohmic resistor R2 is connected in series with said reactance (C; L) and this series circuit is connected between a supply voltage terminal (V_{c}) and ground, and the junction of said series circuit is connected to the input (E) of the microprocessor (10).

## Revendications

1. Procédé destiné à vérifier la mise en circuit et la programmation correcte des entrées (E) d'un microprocesseur (10) dans un appareil de commande, notamment un appareil de commande d'un brûleur, le microprocesseur (10) utilisé étant du type dont l'entrée peut, au choix, être configurée en sortie, caractérisé par les étapes suivantes:
a) à l'entrée (E) est reliée un organe de temps (C, R1, R2; L, R2) renfermant une réactance (bobine, condensateur) ;
b) l'entrée est configurée en tant que sortie, par un programme de commande, et mise à un potentiel de sortie de niveau bas (0);
c) après un intervalle de temps, qui correspond à un multiple, par exemple égal à dix fois la valeur de la constante de temps de l'organe de temps, l'entrée est à nouveau commutée, par le programme de commande, sur sa fonction d'entrée;
d) directement ensuite, de préférence à l'intérieur d'un intervalle de temps qui est inférieur au dixième de la constante de temps de l'organe de temps, la tension à l'entrée est mesurée et mémorisée;
e) après un intervalle de temps, qui correspond à un multiple, par exemple égal à dix fois la valeur de la constante de temps de l'organe de temps, la tension à l'entrée est à nouveau mesurée et mémorisée;
f) l'entrée n'est considérée comme étant correctement en circuit et correctement programmée, que lorsque
f1), dans le cas d'une réactance capacitive (C), pour la première mesure (d), la tension à l'entrée est au niveau bas (0) et pour la seconde mesure (e), la tension à l'entrée est au niveau haut (1) ; ou lorsque
f2) dans le cas d'une réactance inductive (L), pour la première mesure (d), la tension à l'entrée est au niveau haut (1), et pour la seconde mesure (e), la tension à l'entrée est au niveau bas (0).

2. Circuit pour la mise en oeuvre du procédé selon la revendication 1, caractérisé en ce que l'organe de temps englobe en guise de réactance, une réactance existant de toute façon dans l'appareil de commande, telle que par exemple une bobine de relais ou un condensateur d'horloge.

3. Circuit selon la revendication 2, caractérisé en ce qu'avec la réactance (C; L) est montée en série une résistance ohmique (R2), entre une borne de tension d'alimentation (Vc) et la masse, et le point de jonction du montage série est relié à l'entrée (E) du microprocesseur (10).
